# EUROPÄISCHE PATENTSCHRIFT

(11) **EP 0 495 813 B1**
(45) Veröffentlichungstag und Bekanntmachung des Hinweises auf die Patenterteilung: **24.01.1996**
(21) Anmeldenummer: 90914693.8
(22) Anmeldetag: 06.10.1990
(51) Int. Cl.: B60T 8/32, B60T 8/40, B60T 8/44

(54) **VORRICHTUNG ZUM BETRIEB EINER HILFSPUMPE**
DEVICE FOR OPERATING AN AUXILIARY PUMP
DISPOSITIF POUR L'UTILISATION D'UNE POMPE AUXILIAIRE

(30) Priorität: 20.10.1989 DE 3935071
(43) Veröffentlichungstag der Anmeldung: 29.07.1992
(73) Patentinhaber: ITT Automotive Europe GmbH, D-60488 Frankfurt (DE)
(72) Erfinder: VOLZ, Peter, D-6100 Darmstadt (DE)
(86) Internationale Anmeldenummer: EP9001680
(87) Internationale Veröffentlichungsnummer: WO9105686

(56) Entgegenhaltungen:
- EP-A- 0 265 623
- EP-A- 0 313 292
- WO-A-89/08573
- WO-A-89/10287
- DE-A- 3 237 959
- DE-A- 3 404 135
- DE-A- 3 731 408
- DE-A- 3 813 172
- DE-A- 3 813 174
- DE-A- 3 836 082
- FR-A- 2 620 991
- GB-A- 2 197 402

## Beschreibung

Die Erfindung betrifft eine elektrohydraulische Regelvorrichtung gemäß dem ersten Teil des Anspruchs 1. Eine derartige Anlage ist in der GB-A-22 197 402 beschrieben. Eine Weiterbildung der Anlage ist in der DE-A-38 13 172 (Offenlegungstag: 2. November 1989) dargestellt. Zum Stand der Technik ist auch die FR-A-26 20 991 zu nennen.

In der erstgenannten Schrift wird beschrieben, daß der Arbeitskolben des Hauptzylinders während einer Regelung in eine definierte Position gebracht wird, die garantiert, daß im Hauptzylinder ein ausreichendes Druckmittelvolumen verbleibt, so daß beim Ausfall der Pumpen das Fahrzeug weiterhin im ausreichenden Maße abgebremst werden kann. Die definierte Position wird in der Schrift mit "B" bezeichnet. Während einer Regelung wird also der Arbeitskolben und damit das Pedal in eine definierte Position gebracht, die unabhängig ist von der Pedalkraft, die der Fahrer aufbringt. Die dem Fahrer bekannte Beziehung zwischen Pedalweg und Brems- bzw. Hauptzylinderdruck während einer nichtgeregelten Bremsung geht somit verloren.

In der deutschen Schrift wird vorgeschlagen, die Pedalpositionierung durch die Änderung des Fördervolumens der Pumpe zu erzielen, wobei insbesondere ins Auge gefaßt worden ist, die Antriebsleistung des Pumpenmotors zu verändern. Aus der französischen Schrift ist bekannt, die effektive Förderleistung einer Pumpe in einem Antiblockiersystem zu verändern, indem bei gleichbleibender Antriebsleistung des Pumpenmotors ein Bypass zwischen der Druck- und der Saugseite der Pumpe geöffnet wird, so daß die Pumpe im Kreis fördert und keine effektive Förderung in das Bremssystem hinein stattfindet.

Die Erfindung beruht auf der Aufgabe, auch während einer Regelung die einzustellende Position des Arbeitskolbens bzw. des Pedals an den Hauptzylinderdruck anzupassen.

Die Aufgabe wird mit den Mitteln gelöst, die im zweiten Teil des Anspruchs 1 genannt sind.

Eine weitere Aufgabe der Erfindung besteht darin, geeignete Mittel zur Erfassung des Arbeitskolbenweges zur Verfügung zu stellen. Die genannten Anmeldungen sehen einen Schalter vor, der vom Arbeitskolben unmittelbar betätigt wird. Diese Anordnung ist aufwendig zu montieren und schwer zu justieren. Daher wird vorgeschlagen einen Durchflußmesser in der Bremsleitung vorzusehen, wobei die Druckmittelmenge, die der Arbeitskammer des Hauptzylinders zu- oder abfließt erfaßt wird, wodurch unmittelbar auf die Position des Kolbens geschlossen werden kann.

Weitere vorteilhafte Weiterbildungen des Erfindungsgedankens sind in den Unteransprüchen beschrieben.

Weitere Einzelheiten der Erfindung sind der folgenden Beschreibung eines Ausführungsbeispieles zu entnehmen.

Die Figur zeigt eine Antiblockierregelvorrichtung gemäß der Erfindung.

Die Vorrichtung umfasst folgende Aggregate: einen vom Bremspedal 1 betätigten Vakuumbremskraftverstärker 9, einen Tandemhauptzylinder 16, einen Modulator 2 für die Druckregelung im Antiblockierregelmodus, einen elektronischen Regler 5 zur Verarbeitung von Sensorsignalen und eine Hydraulikdruckpumpe 7, 8, die von einem Elektromotor 6 angetrieben werden.

In der Figur ist die Anlage in Lösestellung gezeigt. Die Druckkammern 10, 15 des Hauptzylinders sind in bekannter Weise über offene Zentralventile, über Anschlußkanäle im Innern der Kolben sowie über Ringkammern 13, 14 in den Arbeitskolben 11, 12 über Bohrungen und über hydraulische Leitungen 19, 20 mit dem Druckmittelvorratsbehälter 3 verbunden.

Die beiden Druckkreise 21, 22 des Hauptzylinders sind über elektromagnetisch betätigbare, in der Grundstellung auf Durchlaß geschaltete Ventile, sogenannte "Stromlos-Offen-Ventile" (SO-Ventile) oder Einlaßventile 23, 24, 25, 26 mit den Radbremsen 27, 28, 29, 30, verbunden.

Die parallel geschalteten Radbremsen 27, 28 beziehungsweise 29, 30, sind den diagonal angeordneten Druckkreisen (Bremskreisen) 21, 22 zugeordnet. Für die Anordnung der zu den genannten Bremsen korrespondierenden Fahrzeugrädern wurden folgende Kurzbezeichnungen benutzt: VL für vorn links, HR für hinten rechts, VR für vorn rechts, HL für hinten links. Die Radbremsen 27, 28, 29 30 sind außerdem über elektromagnetisch betätigbare, in der Grundstellung sperrende Ausgangsventile 31, 32, 33, 34 sogenannte "Stromlos-Geschlossen-Ventile" (SG-Ventile), über eine Rückflußleitung 4 an den Vorratsbehälter 3 angeschlossen. Die Fahrzeugräder sind mit induktiven Sensoren S ausgerüstet, die mit synchron zur Radumdrehung mitlaufenden Zahnscheiben zusammenwirken und elektrische Signale erzeugen, die das Raddrehverhalten, das heißt die Radumfangsgeschwindigkeit und Änderungen dieser Geschwindigkeit, erkennen Lassen. Diese Signale werden dem elektronischen Regler 5 zugeführt. Der elektronische Regler verarbeitet die Sensorsignale aufgrund eines in ihm gespeicherten Regelalgorithmus zu Ausgangssignalen (Bremsdrucksteuersignale), mit denen im Bremsdruckregelmodus, die SO-Ventile und SG-Ventile geschaltet werden, wodurch in den einzelnen Radzylindern entsprechend dem Regelalgorithmus die Bremsdrücke abgebaut, konstant gehalten, oder wieder erhöht werden. Über die Ausgänge des elektronischen Reglers werden hierzu die Betätigungsmagnete der SO-Ventile und SG-Ventile angesteuert. Im Bremsdruckregelmodus wird der Elektromotor 6 der Pumpen 7, 8 in Betrieb gesetzt. Das Einschaltsignal erhält der Motor vom elektronischen Regler 5. Die Pumpe baut im Regelmodus Druck in den Druckleitungen 50, 51 auf. Diese Leitungen stellen eine Druckmittelführung dar, die mit der Druckmittelführung des Tandemhauptzylinders, in Form der Druckleitungen 21, 22 verbunden ist. Im Regelmodus werden also die Druckräume 10, 15 des Tandemhauptzylinders durch die Pumpen unter Druck gesetzt.

Bei Bremsbetätigungen im Normalbremsmodus wird die Pedalkraft F, unterstützt durch den Unterdruck im Verstärker 9 auf die Hauptzylinderkolben übertragen. Die Zentralventile in diesen Kolben schließen, so daß sich nunmehr in den Druckkammern 10, 15 und damit in den Bremskreisen 21, 22 Bremsdruck aufbauen kann, der über die SO-Ventile 23, 24, 25, 26 zu den Radbremszylindern gelangt. Wird nun mit Hilfe der Sensoren S und des elektronischen Reglers 5 eine Blockiertendenz an einem oder mehreren Rädern erkannt, setzt der Antiblockierregelmodus ein. Der Antriebsmotor 6 der Pumpen 7, 8 schaltet sich ein, wodurch in den Druckleitungen 50, 51 Druck aufgebaut wird, der einerseits über die SO-Ventile auf die Radzylinder der Radbremsen einwirkt und andererseits die Druckkammern des Hauptzylinders mit Druck, wie dargestellt, beaufschlagt.

Entsprechend dem Regelalgorithmus führen weitere Signale des elektronischen Reglers zur Umschaltung der elektromagnetisch betätigbaren SOund SG-Ventile.

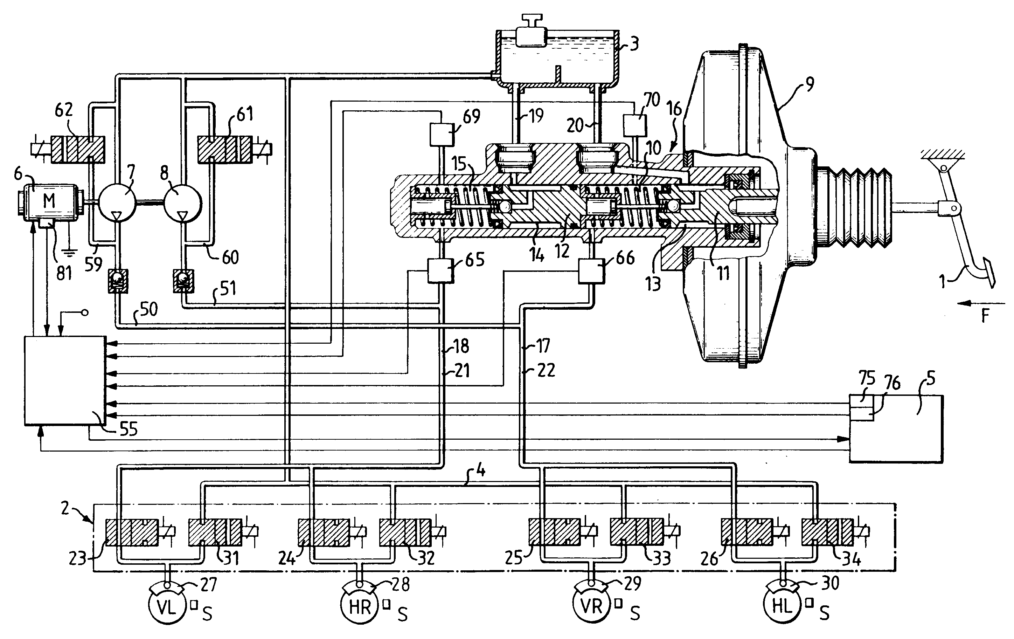

Infolge des Pumpendrucks in den Arbeitskammern 10 und 15 werden die Arbeitskolben 11 und 12 in der Figur 1 nach rechts verschoben.

Um auch im Regelmodus eine feste Relation zwischen dem Druck im Hauptzylinder und dem Arbeitskolben, bzw. des Bremspedals zu verwirklichen, sind folgende Maßnahmen vorgesehen.

Die Durchflußmesser 65, 66 sind in die Bremsleitungen 17, 18 am Ausgang des Hauptzylinders eingesetzt. Unterhalb der Durchflußmesser münden die Druckleitungen 50, 51 in die Bremsleitungen.

Die Durchflußmesser ermitteln sowohl das Druckmittelvolumen, das von den Arbeitskammern in die Bremskreise gelangt, als auch den Druckmittelfluß in umgekehrter Richtung. Die Durchflußraten lassen daher einen unmittelbaren Schluß auf die Position des Arbeitskolbens zu.

Außerdem sind Drucksensoren 69, 70 zur Ermittlung des Drucks in den Arbeitsräumen vorgesehen. Die Drucksensoren wandeln den hydraulischen Druck in elektrische Signale um, die über die Leitungen an das Elektromotorregelgerät 55 weitergeleitet werden.

75, 76 sind Symbole für Regelalgorithmen, die weiterhin als Volumenmodelle bezeichnet werden. Mit Hilfe der Volumenmodelle wird der Volumenbedarf für die Arbeitsräume des Tandemhauptzylinders errechnet. Die Fördervolumina der Pumpen sollen so bemessen sein, daß eine gewillkürte Soll-Position der Arbeitskolben und damit des Bremspedals während des ABS-Regelmodus erreicht wird. Am Ausgang des elektronischen Reglers 5 werden Signale zur Verfügung gestellt, die über die elektrischen Leitungen an das Elektromotorregelgerät weitergeleitet werden.

Der Elektromotor 6 ist mit einem Sensor 81 für die Drehzahl des Motors versehen.

Zu den Aufgaben des Elektromotorregelgerätes gehört die Ein und Ausschaltung des Motors über ein Relais beziehungsweise die Regelung des Elektromotors und damit der Fördervolumina der Pumpen zur Erzielung der Soll-Positionen der Arbeitskolben des Hauptzylinders und des Bremspedals vor dessen Ausgangsposition. Die Pumpenfunktion, die Drehzahl des Motors, der Druck in den Arbeitsräumen und die Zurverfügungstellung einer genügenden Druckmittelreserve für den Hauptzylinder werden überwacht
Die Elektromotorregelung dient im weitesten Sinn dazu, den Bedienungskomfort des Bremspedals zu erhöhen und neben der Positionierung selbst auch die Positionierungsgeschwindigkeit für das Bremspedal festzulegen. Mit der Elektromotorregelung kann schließlich eine weitgehende Geräuschdämpfung erzielt werden.

Die Vorrichtung arbeitet wie folgt:
Aufgrund der im elektronischen Regler gespeicherten Volumenmodelle 75, 76 für den Druckstangenkolben und Schwimmkolben werden während des Regelmodus Signale für den Volumenbedarf zur Verfügung gestellt. Die Volumenbedarfsignale werden zusammen mit den Wegsensorsignalen und den Drucksensorsignalen und den Drehzahlsensorsignalen im Elektromotorregelgerät 55 zu Stellsignalen am Ausgang für den Elektromotor verarbeitet. Damit werden die Fördervolumina der Pumpen 7, 8 variiert. Mit der Veränderung der Fördervolumina werden die gewünschte Positionierung und Positionierungsgeschwindigkeit der Arbeitskolben, insbesondere des Druckstangenkolbens, und damit des Bremspedals erreicht.

Alternativ oder zusätzlich zu der Regelung über den Elektromotor können die Pumpenventile 61, 62 eingesetzt werden, die entsprechend der im elektroischen Regler gespeicherten Regelalgorithmen getaktet werden und damit die Förderleistung der Pumpen variieren.

Mit der beschriebenen Anlage wird eine genaue Pedalpositionierung erreicht, sowie eine totale Pumpenüberwachung. Die Fördermengen für die beiden Betätigungskreise des Bremssystems können individuell geregelt werden. Das Pedalgefühl wird verbessert. Der Energieverbrauch wird reduziert. Als Tandemhauptzylinder kann ein Standard -Tandemhauptzylinder mit einem Schnüffellochsystem zum Einsatz kommen.

Die Maßnahmen, die im Ausführungsbeispiel beschrieben sind, bewirken, daß während einer Bremsdruckregelung ein definierter Zusammenhang zwischen der Pedalkraft und dem Pedalweg besteht. Mit den genannten Mitteln läßt sich dies sehr einfach realisieren, wobei insbesondere durch den Einsatz von Durchflußmessern eine problemlose Möglichkeit besteht, die Wege der Arbeitskolben und damit des Pedals zu bestimmen.

### Liste der Einzelteile

- 1: Bremspedal
- 2: Modulator
- 3: Vorratsbehälter
- 4: Rücklaufleitung
- 5: elektronischer Regler
- 6: Motor
- 7: Pumpe
- 8: Pumpe
- 9: Vakuumbremskraftverstärker
- 10: Druckraum
- 11: Arbeitskolben
- 12: Arbeitskolben
- 13: Nachlaufraum
- 14: Nachlaufraum
- 15: Druckraum
- 16: Tandemhauptzylinder
- 17: Bremsleitung
- 18: Bremsleitung
- 19: hydraulische Leitung
- 20: hydraulische Leitung
- 21: Druckkreis
- 22: Druckkreis
- 23: SO-Ventil
- 24: SO-Ventil
- 25: SO-Ventil
- 26: SO-Ventil
- 27: Radbremse
- 28: Radbremse
- 29: Radbremse
- 30: Radbremse
- 31: SG-Ventil
- 32: SG-Ventil
- 33: SG-Ventil
- 34: SG-Ventil
- 50: Druckleitung
- 51: Druckleitung
- 55: Regelgerät
- 59: Leitung
- 60: Leitung
- 61: Ventil
- 62: Ventil
- 65: Durchflußmesser
- 66: Durchflußmesser
- 69: Drucksensor
- 70: Drucksensor
- 75: Volumenmodell
- 76: Volumenmodell
- 81: Sensor

## Patentansprüche

1. Elektrohydraulische Regelvorrichtung für hydraulische Kraftfahrzeugbremsanlagen, insbesondere Antiblockierregelvorrichtung, mit einem Hauptzylinder (16), der mindestens einen Arbeitskolben (11, 12) und eine Arbeitskammer (10, 15) umfaßt, vorzugssweise einem Durchlaßventile und Sperrventile umfassenden Druckmodulator (2) für die Modulation des hydraulischen Drucks in den Radzylindern während des Regelmodus, mindestens einer Pumpe (7, 8), die mit ihrer Druckseite an die Arbeitskammer und an den Druckmodulator (2) anschließt, mindestens einen elektronischen Regler (5), der Radsensorsignale zu Stellsignalen für die Durchlaß-und Sperrventile des Druckmodulators verarbeitet mit einem Wegsensor (65, 66) zum Erfassen der Bewegung des Arbeitskolbens, einem Drucksensor (69, 70) zum Erfassen des Drucks in der Arbeitskammer, wobei die Wegsensorsignale und die Drucksensorsignale, zu einer Stellgröße zur Steuerung des Pumpenfördervolumens eingesetzt werden, wobei die Stellgröße derart bestimmt wird, daß jedem Druck in der Arbeitskammer (10, 15) eine Position des Arbeitskolbens (11, 12) zugeordnet wird, wobei die Korrelation zwischen Druck und Position in etwa dem Druck/Positionsverhältnis bei einer ungeregelten Bremsung entspricht, mit der Maßgabe, daß in der Arbeitskammer des Hauptzylinders eine Mindestdruckmittelmenge verbleibt.

2. Vorrichtung nach Anspruch 1, dadurch **gekennzeichnet,** daß in den Bremsleitungen, die von den Arbeitskammern des Hauptzylinders wegführen, Durchflußsensoren angeordnet sind, die die zu- und abfließende Druckmittelmenge vom Hauptzylinder erfassen.

3. Vorrichtung nach Anspruch 1, dadurch **gekennzeichnet**, daß die Druckseite der Hilfspumpe mit der Saugseite durch eine Leitung (59, 60) verbunden ist, die ein Ventilelement (61, 62) aufweist, wobei das Ventilelement vorzugsweise als ein in seiner Ruhestellung sperrendes, elektromagnetisch betätigbares Ventil ausgebildet ist, das durch eletrische Signale schaltbar ist, wobei die Stellgröße zum Schalten der Pumpenventile benutzt wird.

4. Vorrichtung nach Anspruch 1, dadurch **gekennzeichnet**, daß die Pumpe von einem Elektromotor angetrieben wird, wobei die Stellgröße zum Takten der elektrischen Spannung des Antriebsmotors und damit zur Drehzahlregelung benutzt wird.

## Claims

1. An electrohydraulic control apparatus for hydraulic automotive vehicle brake systems, in particular an anti-locking control apparatus, including a master cylinder (16) which comprises at least one power piston (11, 12) and one power chamber (10, 15), preferably a pressure modulator (22) with throughflow valves and shut-off valves which serves for the modulation of the hydraulic pressure in the wheel cylinders during the control mode, at least one pump (7, 8) connecting with its pressure side to the power chamber and the pressure modulator (2), at least one electronic controller (5) which processes wheel sensor signals to generate position signals for the throughflow and shut-off valves of the pressure modulator, a travel sensor (65, 66) to monitor the movement of the power piston, a pressure sensor (69, 70) to monitor the pressure in the power chamber, the travel sensor signals and the pressure sensor signals being processed to generate a correcting variable to control the delivery volume of the pump,
wherein the correcting variable is determined in such a manner that any pressure rating in the power chamber (10, 15) is correlated to a position of the power piston (11, 12), the correlation between the pressure rating and the position roughly corresponding to the pressure rating/position ratio during a noncontrolled braking action, with the proviso that a minimum quantity of pressure fluid remains in the power chamber of the master cylinder.

2. An apparatus as claimed in claim 1,
**characterized** in that in the brake lines, which lead away from the power chambers of the master cylinder, flow sensors are positioned which monitor the quantity of hydraulic fluid which flows into and off from the master cylinder.

3. An apparatus as claimed in claim 1,
**characterized** in that the delivery side of the auxiliary pump is connected to the suction side by a line (59, 60) having a valve element (61, 62), the valve element being preferably provided as an electromagnetically actuatable valve which closes in its position of rest and is switchable by electric signals, the correcting variable being used for operation of the pump valves.

4. An apparatus as claimed in claim 1,
**characterized** in that the pump is driven by an electric motor, the correcting variable being utilized to clock the electric voltage of the driving motor and, thus, to control the rotation rate.

## Revendications

1. Dispositif de régulation électrohydraulique pour système de freinage hydraulique de véhicule automobile, notamment dispositif de régulation antiblocage, comprenant un maître-cylindre (16), qui comporte au moins un piston de travail (11, 12) et une chambre de travail (10, 15), de préférence un modulateur de pression (2), comportant des valves de passage et des valves de blocage et servant à moduler la pression hydraulique dans les cylindres de roue au cours du mode de régulation, au moins une pompe (7, 8), qui est raccordée, par son côté de refoulement, à la chambre de travail et au modulateur de pression (2), au moins un régulateur électronique (5), qui traite des signaux de capteur de roue de façon à donner des signaux de commande destinés aux valves de passage et valves de blocage du modulateur de pression, un capteur de course (65, 66), servant à détecter le déplacement du piston de travail, un capteur de pression (69, 70), servant à détecter la pression dans la chambre de travail, les signaux du capteur de course et les signaux du capteur de pression étant utilisés pour une grandeur de réglage servant à commander le volume de refoulement de la pompe et la grandeur de réglage étant établie d'une façon telle qu'à chaque pression dans la chambre de travail (10, 15), est associée une position du piston de travail (11, 12), tandis que la corrélation entre la pression et la position correspond pratiquement au rapport pression/position lors d'un freinage non soumis à une régulation, sous réserve qu'une quantité minimale d'agent de pression subsiste dans la chambre de travail du maître-cylindre.

2. Dispositif selon la revendication 1, caractérisé en ce que des capteurs de débit, qui déterminent le débit d'agent de pression s'écoulant vers le maître-cylindre et en provenance de ce dernier, sont disposés dans les conduites de frein qui s'éloignent des chambres de travail du maître-cylindre.

3. Dispositif selon la revendication 1, caractérisé en ce que le côté de refoulement de la pompe auxiliaire est relié à son côté d'aspiration par une conduite (59, 60) qui comporte un élément de valve (61, 62), l'élément de valve étant de préférence réalisé sous la forme d'une valve à commande électromagnétique qui bloque dans sa position de repos et qui est agencée de façon à pouvoir être commutée par des signaux électriques, la grandeur de réglage étant utilisée pour commuter les valves de pompe.

4. Dispositif selon la revendication 1, caractérisé en ce que la pompe est entraînée par un moteur électrique, la grandeur de réglage étant utilisée pour faire varier d'une manière réglée dans le temps la tension électrique du moteur d'entraînement et donc pour assurer la régulation du nombre de tours.
